Europäisches Patentamt

European Patent Office

Office européen des brevets

(11) Publication number: **0 653 464 A2**

# EUROPEAN PATENT APPLICATION

(21) Application number: **94118155.4**

(22) Date of filing: **17.11.94**

(51) Int. Cl.6: **C08L 101/00**, C08J 3/00, C08L 21/00

(30) Priority: **17.11.93 JP 288472/93**
**26.05.94 JP 113202/94**
**07.11.94 JP 272246/94**
**28.12.93 JP 337368/93**
**26.05.94 JP 113203/94**

(43) Date of publication of application:
**17.05.95 Bulletin 95/20**

(84) Designated Contracting States:
**DE FR IT**

(71) Applicant: **BRIDGESTONE CORPORATION**
**10-1, Kyobashi 1-Chome**
**Chuo-Ku**
**Tokyo 104 (JP)**

(72) Inventor: **Toyosawa, Shinichi**
**1407-15, Arahata**
**Tokorozawa-shi,**
**Saitama-ken (JP)**
Inventor: **Yamazaki, Hirotaka**
**2-8-36, Nishi**
**Kunitachi-shi,**
**Tokyo (JP)**
Inventor: **Mashita, Naruhiko**
**3-2-6-506, Ogawa-higashi-cho**
**Kodaira-shi,**
**Tokyo (JP)**
Inventor: **Imai, Yasushi**
**3-5-5-820, Ogawa-higashi-cho**
**Kodaira-shi,**
**Tokyo (JP)**
Inventor: **Matsuse, Takahiro**
**3-3-5-209, Ogawa-higashi-cho**
**Kodaira-shi,**
**Tokyo (JP)**
Inventor: **Kubo, Takaharu**
**1507-1-5-304, Irumagawa**
**Sayama-shi,**
**Saitama-ken (JP)**
Inventor: **Fukahori, Yoshihide**
**2-9-7, Sanda-cho**
**Hachioji-shi,**
**Tokyo (JP)**

(74) Representative: **Hansen, Bernd, Dr.**
**Dipl.-Chem. et al**
**Hoffmann, Eitle & Partner,**
**Patentanwälte,**
**Arabellastrasse 4**
**D-81925 München (DE)**

(54) A polymer composition having a low modulus and a process for producing the same.

(57) A polymer composition comprising a polymer material and a medium material composite holding a low molecular weight material therein is provided. Viscosity of the low molecular weight material, differences in respective solubility parameters of the low molecular weight material, the medium material and the polymer material, relative amounts of the low molecular weight material and the medium material, and relative amounts of the low molecular weight material and the polymer material are specified. A process for producing the polymer composition is also provided. The process comprises a process (S1) for preparing the medium material composite holding the low molecular weight material therein, in which the medium material has a backbone structure of a three-dimensionally continuous network, and a process (S2) for preparing the polymer composition by mixing the prepared medium material composite with the polymer material. The process (S1) comprises mixing the low molecular weight material and the medium material by using a mixing machine at a specific shear rate and a specific temperature. The process (S2) comprises using a mixing machine under specific mixing conditions. The polymer composition is advantageously used for electric appliances, sporting goods, industrial machines and instruments, precision machines and instruments, transportation machines and instruments, buildings, civil engineering, medical uses, leisure goods, and the like. Particularly, it is used for

EP 0 653 464 A2

apparatuses and electric appliances which generate vibration or sound.

FIELD OF THE INVENTION

The present invention relates to a polymer composition. More particularly, the present invention relates to a polymer composition holding a large amount of a low molecular weight material therein, which polymer composition has a low modulus, is provided with a high loss property, has an excellent property of suppressing bleeding of the low molecular weight material and various other properties which are excellent, exhibits economical advantages and can be advantageously applied for general use. The present invention also relates to a process for producing said polymer composition which process can realize a controlled phase structure, is excellent in homogeneous dispersion of a large amount of the low molecular weight material and exhibits superior industrial produceability.

PRIOR ART OF THE INVENTION

In the field of polymer materials, polymer compositions having very low moduli, such as rubber compositions having very low moduli and plastic compositions having very low moduli, which polymer compositions exhibit high performance, high functional properties, excellent economic properties and properties suited for general use have come to be required as the applications of polymer materials have diversified. Processes for producing such polymer compositions which processes necessitate technologies for blending large amounts of low molecular weight materials with polymer materials are also strongly desired.

General use polymer compositions having low moduli to some degree, such as compositions containing a general use polymer material and a low molecular weight material (such as a liquid) up to a medium amount, have heretofore been known. These polymer compositions are widely known because these materials can be obtained relatively easily by mixing a polymer material with a suitable amount of a low molecular weight material, which has good compatibility with the polymer material, by using a machine conventionally used in the industry such as a mixer. However, because the amount of the low molecular weight material used in these processes is limited, a polymer composition having a very low modulus cannot be obtained. A general use polymer composition having a very low modulus might be obtained by preparing a composition containing a general use polymer material component and a large amount of a low molecular weight material component. However, no such polymer composition has heretofore been known. When preparation of a polymer composition having a very low modulus, for example a polymer composition containing 100 parts by weight of a polymer material component and 50 parts by weight or more of a low molecular weight material component, is attempted by mixing the both components using a mixer or the like, the polymer material component slips in the mixing process and it is difficult to obtain a homogeneous polymer composition. When the mixing was performed carefully for a long time, a desired polymer composition can occasionally be obtained. However, industrial produceability in this case is naturally very low and the process is not suitable for industrial application. Even when a polymer composition is obtained by mixing for a long time, the resultant polymer composition containing a large amount of a low molecular weight material often lacks in homogeneity and it is difficult to prevent bleeding of the low molecular weight material. Many drawbacks are also found with respect to processability and physical properties. For overcoming the drawbacks described above, a process for decreasing modulus by a composition prepared from a polymer material component and a component containing a low molecular weight material covered on the surface of particles has been proposed. However, a large decrease in modulus cannot be expected because the amount of the low molecular weight material used is limited.

As the polymer composition having a low modulus, compositions containing a polymer material component of a specific type of polyurethane and a low molecular weight material component are also known. However, because the polymer material component has a specific structure, the low molecular weight material used in combination is limited to specific type of materials. Therefore, the resultant polymer composition has limited physical properties and used only for limited specific applications. The polymer material used is not for general use and lacks economical advantages. Thus, this polymer composition cannot be used as a general use material.

The facts described above show that the conventional polymer compositions have a serious problem with respect to the material components constituting the polymer compositions.

Therefore, it has been a subject of study for long time that a polymer composition having a very low modulus be obtained.

As for the technology for polymer blending, scientific studies on the mechanism of phase separation and exhibition of physical properties have been widely undertaken through thermodynamic treatments and rheological discussions of the phase structure of blends of polymer materials. Particularly, thermodynamic studies using temperature and compatibility between materials as the basic parameters have been actively conducted and the phase structure of a blend at the equilibrium condition has been shown to be predicted theoretically. Even though mechanisms of the phase separation in the compatible region, in the semi-stable region and in the non-compatible region have been actively studied as described above, attention has rarely been paid on a process and an apparatus for producing such phase structures of blends.

As well known, it is not easy to produce a homogeneous polymer composition having a controlled phase structure by blending a large amount of a low molecular weight material and a polymer material. In a method of producing such a composition, both components are mixed by using a conventional mixing machine. However, in many cases, the polymer material slips between the rotors and effective mixing cannot be realized. Even when the appearance shows successful mixing, the low molecular weight material component tends to bleed to the surface because of the insufficient mixing. In another method of producing such a composition, a low molecular weight material and a polymer material having good compatibility with each other can be mixed together and swelled for a long time (in extreme cases, for several days). However, this method is not suitable for industrial production.

Therefore, it is the important subject of study to discover a process for easily producing a low modulus polymer material having an excellent phase structure and superior physical properties.

SUMMARY OF THE INVENTION

An object of the present invention is to provide a polymer composition holding a large amount of a low molecular weight material therein which has a low modulus, is provided with a high loss property, is excellent in the property of suppressing bleeding of the low molecular weight material and various other properties, shows economical advantage and can be advantageously applied for general use. Another object of the present invention is to provide a process for producing said polymer composition which can realize a controlled phase structure, is excellent in homogeneous dispersion of a large amount of the low molecular weight material and exhibits superior industrial produceability.

In order to achieve the above-described object, the present invention provides a polymer composition comprising a medium material composite (A) which holds a low molecular weight material therein and which comprises a low molecular weight material, and a medium material, and a polymer material (B), wherein

the low molecular weight material has a viscosity of $5 \times 10^5$ centipoise or lower at 100°C,

difference in solubility parameters of the low molecular weight material and the medium material is 3 or less,

ratio by weight of the low molecular weight material to the medium material is 1 or more,

difference in solubility parameters of the low molecular weight material and the polymer material is 4 or lower, and

ratio by weight of the low molecular weight material to the polymer material is 0.3 or more.

Another aspect of the present invention is a process for producing a polymer composition comprising a process (S1) for obtaining a medium material composite holding a low molecular weight material therein by mixing a low molecular weight material and a medium material, and a process (S2) of mixing the medium material composite obtained at least with a polymer material, wherein

the process (S1) comprises mixing the low molecular weight material having a viscosity of $5 \times 10^5$ centipoise or lower at 100°C and the medium material having a solubility parameter different from that of the low molecular weight material by 3 or less in such amounts that ratio by weight of the low molecular weight material to the medium material is 1 or more, by using a mixing machine under a shearing condition that the shear rate V which is defined by V = v/t (sec$^{-1}$) [v (m/sec): circumferential rotation speed of a rotor; t (m): clearance between the fixed wall and the rotor] is $5 \times 10^2$ or higher, and the mixing temperature is equal to or higher than the melting point or the glass transition temperature of the medium material, to obtain the medium material composite holding the low molecular weight material therein, in which the medium material has a backbone structure of a three-dimensionally continuous network; and

the process (S2) comprises mixing the medium material composite holding the low molecular weight material therein with the polymer material having a solubility parameter different from that of the low molecular weight material by 4 or less in such amounts that ratio by weight of the low molecular weight material to the polymer material is 0.3 or more, by using a mixing machine at a rotation speed of 20 to 100 r.p.m. at a mixing temperature of 30 to 100°C.

BRIEF DESCRIPTION OF THE DRAWING

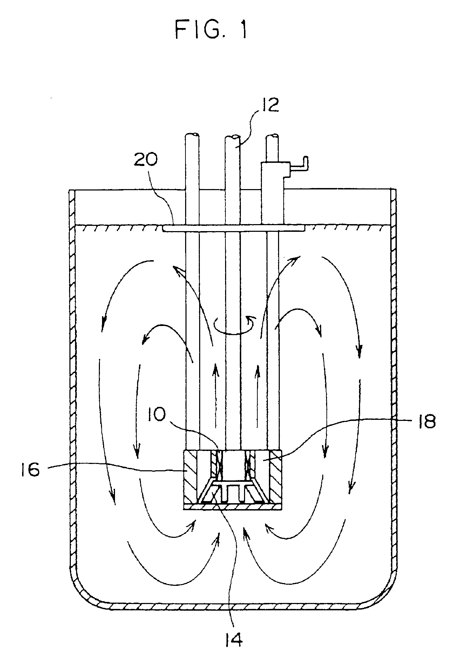

The invention will be described with reference to the accompanying drawing, wherein Figure 1 is a sectional view showing outline of the mixing machine used in the present invention.

DETAILED DESCRIPTION OF THE INVENTION

The present invention is described in more detail hereinafter.

As the low molecular weight material of the present invention, a material having a viscosity of $5 \times 10^5$ centipoise or lower, preferably $1 \times 10^5$ centipoise or lower at 100°C is used. From the view point of molecular weight, a material having a number-average molecular weight of 20,000 or lower, preferably 10,000 or lower, more preferably 5,000 or lower, is used as the low molecular weight material of the present invention. In general, a material in a liquid state or in a liquid-like state at room temperature is preferably used. Any of a hydrophilic low molecular weight material or a hydrophobic low molecular weight material can be used.

As the low molecular weight material, any material satisfying the properties described above can be used and the type of material is not particularly limited. Examples of the low molecular weight material of the present invention include the following materials:

(1) Softening agents: various types of softening agents of mineral oil, plant oil, and synthetic oil used for rubbers and resins. Examples of the softening agent of mineral oil include aromatic process oils, naphthenic process oils, and paraffinic process oils. Examples of the softening agent of plant oil include caster oil, cotton seed oil, linseed oil, rape-seed oil, soybean oil, palm oil, coconut oil, peanut oil, Japan wax, pine oil, olive oil, and the like. Examples of the softening agent of synthetic oil include aromatic oils and the like.

(2) Plasticizers: plasticizers for plastics, such as phthalic acid esters, phthalic acid mixed esters, aliphatic dibasic acid esters, glycol esters, fatty acid esters, phosphoric acid esters, stearic acid esters and the like; epoxy plasticizers; and plasticizers for NBR, such as phthalate plasticizers, adipate plasticizers, sebacate plasticizers, phosphate plasticizers, polyether plasticizers, polyester plasticizers, and the like.

(3) Tackifiers: various types of tackifiers, such as coumarone resins, coumarone-indene resins, phenol-terpene resins, petroleum hydrocarbons, rosin derivatives, and the like.

(4) Oligomers: various types of oligomers, such as crown ethers, fluorine-containing oligomers, polyisobutylene, xylene resins, chlorinated rubbers, polyethylene waxes, petroleum resins, rosin ester rubbers, polyalkylene glycol diacrylates, liquid rubbers (polybutadiene, styrene-butadiene rubber, butadiene-acrylonitrile rubber, polychloroprene, and the like), silicone oligomers, poly-α-olefins, and the like.

(5) Lubricants: hydrocarbon lubricants, such as paraffin and wax; fatty acid lubricants, such as higher fatty acids, and oxy-fatty acids; fatty acid amide lubricants, such as fatty acid amides, and alkylene-bis-fatty acid amides; ester lubricants, such as lower alcohol esters of fatty acids, polyhydric alcohol esters of fatty acids, polyglycol esters of fatty acids, and the like; alcohol lubricants, such as aliphatic alcohols, polyhydric alcohols, polyglycols, polyglycerols, and the like; metal soaps; and mixed lubricants.

As the low molecular weight material, lateces, emulsions, liquid crystals, pitch compositions, clays, natural starches, sugars, inorganic materials such as silicone oils and phosphazenes, and the like materials, can be used. Further examples of the low molecular weight material used include: animal oils, such as beef tallow, lard, and horse oil; bird oils; fish oils; honey; fruits; solvents, such as milk products like chocolate and yoghurt, hydrocarbons, halogenated hydrocarbons, alcohols, phenols, ethers, acetals, ketones, fatty acids, esters, nitrogen compounds, sulfur compounds, and the like; various types of pharmaceutical compounds; soil modifiers; fertilizers; petroleum; water; and aqueous solutions. These low molecular weight materials may be used singly or as a mixture of two or more types.

As the low molecular weight material, the most suitable material is selected and used in the most suitable amount according to requisite properties and application of the polymer composition, and compatibilities with other components of the present invention, such as the medium material and the polymer material.

The medium material used in the present invention is a material having the function to act as a medium between the low molecular weight material and the polymer material. The medium material is an important component for achieving the object of the invention. In more detail, in order to realize a homogeneous composition comprising a polymer material and a large amount of a low molecular weight material, first, a medium material composite which holds a large amount of the low molecular weight material therein is prepared from a large amount of the low molecular weight material and a medium material. Then, a second stage is carried out in which the object polymer composition which holds a large amount of the low

EP 0 653 464 A2

molecular weight material therein is prepared by the combination of the medium material composite obtained in the first stage with the polymer material. It is impossible to obtain a homogeneous polymer composition having a low modulus by mixing a low molecular weight material with a polymer material. When a large amount of a low molecular weight material and a polymer material are mixed directly in the attempt to obtain a polymer composition holding a large amount of the low molecular weight material therein, the low molecular weight material cannot be mixed homogeneously and bleeding often occurs. Thus, the object polymer composition having a low modulus cannot be obtained. In the present description, "holding" a low molecular weight material means homogeneously dispersing a low molecular weight material into a medium material and a polymer material with no bleeding or with suppressed bleeding. Of course, bleeding can be easily controlled to a desired degree in accordance with the object of the polymer composition.

As the medium material of the present invention, any material which has the function described above and forms a composite holding a large amount of the low molecular weight material therein can be used. In general, a thermoplastic polymer material or a material comprising a thermoplastic polymer material as a component thereof is preferably used.

Examples of the medium material include: thermoplastic elastomers, such as styrenic thermoplastic elastomers (thermoplastic elastomers from butadiene-styrene, isoprene-styrene, and the like), vinyl chloride thermoplastic elastomers, olefininc thermoplastic elastomers (thermoplastic elastomers from butadiene, isoprene, ethylene-propylene, and the like), ester thermoplastic elastomers, amide thermoplastic elastomers, urethane thermoplastic elastomers, hydrogenation products of these thermoplastic elastomers, and other modification products of these thermoplastic elastomers; and thermoplastic resins, such as styrenic thermoplastic resins, ABS thermoplastic resins, olefinic thermoplastic resins (thermoplastic resins from ethylene, propylene, ethylene-propylene, ethylene-styrene, propylene-styrene, and the like), acrylic acid ester thermoplastic resins (thermoplastic resins from methyl acrylate and the like), methacrylic acid ester thermoplastic resins (thermoplastic resins from methyl methacrylate and the like), carbonate thermoplastic resins, acetal thermoplastic resins, nylon thermoplastic resins, halogenated polyether thermoplastic resins (chlorinated polyether and the like), halogenated olefinic thermoplastic resins (thermoplastic resins from vinyl chloride, tetrafluoroethylene, fluorochloroethylene, fluoroethylene-propylene, and the like), cellulose thermoplastic resins (acetylcellulose, ethylcellulose, and the like), vinylidene thermoplastic resins, vinyl butyral thermoplastic resins, and alkylene oxide thermoplastic resins (thermoplastic resins from propylene oxide and the like), and these thermoplastic resins modified with rubber. Among these examples of the medium material, thermoplastic elastomers are preferably used.

Among these medium materials, materials containing both of a hard part having the tendency to become hard blocks, such as a crystalline structure or an aggregated structure, and a soft part such as an amorphous structure in combination are preferable.

The low molecular weight material, the medium material and the medium material composite holding the low molecular weight material therein of the present invention are partly disclosed in Japanese Patent Application Laid-Open Nos. Heisei 5(1993)-239256 and Heisei 5(1993)-194763. The materials having the backbone structure of a three-dimensionally continuous network disclosed in these patent applications can be preferably used as the representative materials for the medium material of the present invention, as well.

More preferably, hydrogenation products of butadiene polymers and butadiene-styrene copolymers are used as the medium material.

1. As the hydrogenation products of butadiene polymers, products having a degree of hydrogenation of the butadiene polymer of 90 % or more are preferably used. The hydrogenation product can have various molecular structures depending on the composition and the distribution of the composition of the 1,4-linkage and the 1,2-linkage of the starting butadiene polymer. Depending on the molecular structure, the hydrogenation product can contain, in a single molecular chain, segments exhibiting various types of crystal-related properties, such as the amorphous properties, the crystalline property, and combinations of the amorphous and crystalline properties.

Specific examples of the segment exhibiting the crystal-related property in the hydrogenation product include (1) a crystalline segment (Sg1) comprising an ethylene block containing the ethylene unit derived from hydrogenation of the butadiene unit of the 1,4-linkage as the main component thereof; and (2) an amorphous segment (Sg2) comprising a block containing the ethylene unit and the butylene unit derived from hydrogenation of the butadiene unit of the 1,4-linkage and the butadiene unit of the 1,2-linkage, respectively, as the main components thereof.

It is preferred that the hydrogenation product of butadiene polymers used in the present invention comprises segments exhibiting the crystal-related property in which both the crystalline property and the amorphous property are included in combination.

6

It is more preferred that the hydrogenation product has a combination of the crystalline segment (Sg1) comprising the ethylene block described above and the amorphous segment (Sg2) comprising a block containing the ethylene unit and the butylene unit described above. In this case, the ethylene block may be present in the single molecular chain as a single block or in a multi-block form containing two or more blocks. Content of the ethylene block in a molecular chain is 5 to 80 %, preferably 10 to 70 %. Number-average molecular weight of the hydrogenation product is $3 \times 10^4$ or more, preferably $5 \times 10^4$ or more.

2. As the hydrogenation products of butadiene-styrene copolymers, products having a degree of hydrogenation of the copolymer of 90 % or more are preferably used. The hydrogenation product can have various molecular structures depending on the composition and the distribution of the composition of the butadiene part of the 1,4-linkage, the butadiene part of the 1,2-linkage and the styrene part in the starting copolymer. Depending on the molecular structure, the hydrogenation product can contain, in a single molecular chain, segments exhibiting various types of crystal-related properties, such as the crystalline property, the aggregating property, the amorphous property, combinations of the amorphous property and the crystalline property, combinations of the aggregating property and the amorphous property, and combinations of the crystalline property, the aggregating property and the amorphous property.

Specific examples of the segment exhibiting the crystal-related property of the hydrogenation product include (1) a crystalline segment (Sg1) comprising an ethylene block containing the ethylene unit derived from hydrogenation of the butadiene unit of the 1,4-linkage as the main component thereof; and (2) an amorphous segment (Sg2) comprising a block containing the ethylene unit and the butylene unit derived from hydrogenation of the butadiene unit of the 1,4-linkage and the butadiene unit of the 1,2-linkage, respectively, as the main components thereof; (3) an aggregating segment (Sg3) comprising a styrene block containing the styrene unit as the main component thereof; (4) an amorphous segment (Sg4) comprising a block containing the butylene unit and the styrene unit derived from hydrogenation of the butadiene unit of the 1,2-linkage and the styrene unit, respectively, as the main components thereof; and (5) an amorphous segment (Sg5) comprising a block containing the ethylene unit, the butylene unit and the styrene unit derived from hydrogenation of the butadiene unit of the 1,4-linkage, the butadiene unit of the 1,2-linkage and the styrene unit, respectively, as the main components thereof.

It is preferred that the hydrogenation product of butadiene-styrene copolymers used in the present invention comprises segments exhibiting the crystal-related properties, such as the property in which both the crystalline property and the amorphous property are included in combination, the property in which both the aggregating property and the amorphous property are included in combination, and the property in which all the crystalline property, the aggregating property and the amorphous property are included in combination.

Among the hydrogenation products described above, the following hydrogenation products are preferably used.

2-1. Hydrogenation products comprising a combination of the crystalline segment (Sg1) comprising an ethylene block described above and the amorphous segment (Sg5) comprising a block containing the ethylene unit, the butylene unit and the styrene unit described above. In this case, the ethylene block may be present in the single molecular chain as a single block or in a multi-block form containing two or more blocks. Content of the ethylene block in a molecular chain is 5 to 80 %, preferably 10 to 70 %. Number-average molecular weight of the hydrogenation product is $3 \times 10^4$ or more, preferably $5 \times 10^4$ or more.

2-2. Hydrogenation products comprising a combination of the aggregating segment (Sg3) comprising a styrene block described above and the amorphous segment (Sg2) comprising a block containing the ethylene unit and the butylene unit described above. In this case, it is preferred that the styrene block described above is present in the single molecular chain in a multi-block form containing two or more blocks. Content of the styrene block in a molecular chain is 5 to 60 %, preferably 10 to 50 %. Number-average molecular weight of the hydrogenation product is $3 \times 10^4$ or more, preferably $5 \times 10^4$ or more.

2-3. Hydrogenation products comprising a combination of the crystalline segment (Sg1) comprising an ethylene block described above, the aggregating segment (Sg3) comprising a styrene block described above, and the amorphous segment (Sg2) comprising a block containing the ethylene unit and the butylene unit described above, and/or the amorphous segment (Sg5) comprising a block containing the ethylene unit, the butylene unit and the styrene unit described above. In this case, the ethylene block, the styrene block and the amorphous segment described above may be present in the single molecular chain as a single block or in a multi-block form containing two or more blocks. Content of the amorphous segments in a molecular chain is 20 to 90 %, preferably 30 to 85 %. Number-average molecular weight of the hydrogenation product is $3 \times 10^4$ or more, preferably $5 \times 10^4$ or more.

3. Preferable examples of the ethylene-propylene copolymer described above include ethylene-propylene binary copolymers and ethylene-propylene-diene ternary copolymers. Preferable examples of the ethylene-propylene copolymer further include copolymers containing 5 to 60 %, preferably 7 to 50 %, of the crystalline segment comprising the ethylene block containing the ethylene unit as the main component thereof, and copolymers containing 5 to 60 %, preferably 7 to 50 %, of the crystalline segment comprising the propylene block containing the propylene unit as the main component thereof.

The thermoplastic elastomer, such as the hydrogenation products of butadiene polymers, the hydrogenation products of butadiene-styrene copolymers, and the ethylene-propylene copolymers, is generally used singly without blending. However, two or more types of the thermoplastic elastomers may be blended and used.

The form of the medium material of the present invention is not particularly limited but conventional forms such as a bulk form, a particulate form, a gel form, foam, and non-woven fabric, can be used. Materials which comprise capsules containing a low molecular weight material may also be used.

In the preparation of the medium material composite which holds a low molecular weight material therein and which contains a large amount of the low molecular weight material and the medium material, the low molecular weight material and the medium materials are selected in such a manner that the difference in solubility parameters of the two materials used is 3 or less, preferably 2.5 or less. When the difference is more than 3, it is difficult to hold a large amount of the low molecular weight material because of decrease in compatibility. Decrease in modulus of the polymer composition becomes difficult and tendency of bleeding of the low molecular weight material is increased. Thus, difference in the solubility parameters of more than 3 is not preferable.

Ratio by weight of the low molecular weight material to the medium material is 1 or more, preferably 2 or more, more preferably 3 or more. When the ratio is less than 1, it is difficult to obtain a polymer composition having a very low modulus and the object of the present invention cannot be achieved.

The polymer material used in the present invention is not particularly limited so long as it is a material having the property for general use. A wide range of conventional thermoplastic materials and thermosetting materials can be used.

Examples of the thermoplastic material include: thermoplastic elastomers, such as styrenic thermoplastic elastomers (thermoplastic elastomers from butadiene-styrene, isoprene-styrene, and the like), vinyl chloride thermoplastic elastomers, olefinic thermoplastic elastomers (thermoplastic elastomers from butadiene, isoprene, ethylene-propylene, and the like), ester thermoplastic elastomers, amide thermoplastic elastomers, urethane thermoplastic elastomers, hydrogenation products of these thermoplastic elastomers, and other modification products of these thermoplastic elastomers; and thermoplastic resins, such as styrenic thermoplastic resins, ABS thermoplastic resins, olefinic thermoplastic resins (thermoplastic resins from ethylene, propylene, ethylene-propylene, ethylene-styrene, propylene-styrene, and the like), acrylic acid ester thermoplastic resins (thermoplastic resins from methyl acrylate and the like), methacrylic ester thermoplastic resins (thermoplastic resins from methyl methacrylate and the like), carbonate thermoplastic resins, acetal thermoplastic resins, nylon thermoplastic resins, halogenated polyether thermoplastic resins (chlorinated polyether and the like), halogenated olefinic thermoplastic resins (thermoplastic resins from vinyl chloride, tetrafluoroethylene, fluorochloroethylene, fluoroethylene-propylene, and the like), cellulose thermoplastic resins (acetylcellulose, ethylcellulose, and the like), vinylidene thermoplastic resins, vinyl butyral thermoplastic resins, and alkylene oxide thermoplastic resins (thermoplastic resins from propylene oxide and the like), and these thermoplastic resins modified with rubber.

The thermosetting material is a material which is heat cured in the presence or absence of a curing agent. Examples of the thermosetting material include: thermosetting rubbers, such as ethylene-propylene rubber (EPR), ethylene-propylene-diene terpolymer (EPDM), nitrile rubber (NBR), butyl rubber, halogenated butyl rubber, chloroprene rubber (CR), natural rubber (NR), isoprene rubber (IR), styrene-butadiene rubber (SBR), butadiene rubber (BR), acrylic rubber, ethylene-vinyl acetate rubber (EVA), and polyurethane; thermosetting specialty rubbers, such as silicone rubber, fluororubber, ethylene-acrylate rubber, polyester elastomers, epichlorohydrine rubber, polysulfide rubbers, Hypalon, and chlorinated polyethylene; and thermosetting resins, such as phenol resin, urea resin, melamine resin, aniline resin, unsaturated polyester resins, diallyl phthalate resin, epoxy alkyd resins, silicone resins, and polyimide resins.

Preferable examples of the polymer material include ethylene-propylene rubber, ethylene-propylene-diene terpolymer rubber, natural rubber, isoprene rubber, styrene-butadiene rubber, and butadiene rubber.

In the present invention, the low molecular weight material and the polymer material are selected in such a manner that difference in solubility parameters of the two materials used is 4 or less, preferably 3 or less. Although the low molecular weight material is mixed with the polymer material by means of the medium material composite which holds the low molecular weight material therein, compatibility between the low molecular weight material and the polymer material is important. When the difference is more than 4, it is difficult for the polymer material to hold a large amount of the low molecular weight material which is held in the medium material composite described above because of the decreased compatibility. It becomes difficult for the modulus of the polymer composition to decrease, and the tendency of the low molecular weight material to bleed increases. Thus, difference in solubility parameters of more than 4 is not preferable.

Ratio by weight of the low molecular weight material to the polymer material is 0.3 or more, preferably 0.4 or more, and more preferably 0.5 or more. A ratio of less than 0.3 is not preferable because it is difficult to obtain a polymer composite having a very low modulus.

The process for producing the polymer composition of the present invention comprises a process (S1) for preparing a medium material composite holding a low molecular weight material therein by mixing the low molecular weight material and a medium material using a mixing machine at a specific shear rate and a specific temperature, and a process (S2) of mixing the prepared medium material composite with a polymer material using a mixing machine under a specific mixing condition. The medium material has a backbone structure of a three-dimensionally continuous network in the medium material composite.

Shear rate in the process (S1) is a very important factor in achieving the object of the present invention. When the shear rate is defined by $V = v/t (sec^{-1})$ [v (m/sec): circumferential rotation speed of a rotor, t (m): clearance between the fixed wall and the rotor], V is $5 \times 10^2$ $(sec^{-1})$ or higher, preferably $1 \times 10^3$ $(sec^{-1})$ or higher, more preferably $2.5 \times 10^3$ $(sec^{-1})$ or higher, and most preferably $5 \times 10^3$ $(sec^{-1})$ or higher. V is expressed by the circumferential rotation speed v and the clearance t, independently of the size of the mixing machine. However, v and t are related to the size of the mixing machine. Particularly, v depends on the rotation speed and the circumferential length of the rotor of the mixing machine, the length being related to the size of the rotor. Therefore, it is difficult to define v and t individually. In general, v is preferably 0.5 (m/sec) or higher, more preferably 1 (m/sec) or higher, and most preferably 2 (m/sec) or higher. In general, t is preferably $3 \times 10^{-3}$ (m) or less, more preferably $2 \times 10^{-3}$ (m) or less, and most preferably $1 \times 10^{-3}$ (m) or less.

By the process (S1) described above, a medium material composite holding a large amount of a low molecular weight material therein can easily be obtained, in which the medium material has a backbone structure of a three-dimensionally continuous network, and in which the low molecular weight material and the medium material are dispersed homogeneously into each other in a size of the order of micron.

When the shear rate V is less than $5 \times 10^2$, the resultant composite cannot have the backbone structure of a three-dimensionally continuous network and the object of the present invention cannot be achieved.

As the mixing machine used in the process (S1) of the present invention, any type of high shear rate mixing machine which satisfies the shear rate V described above can be used.

Conventional apparatuses used for mixing and kneading of materials are generally divided into mixers which aim at realizing homogeneous dispersion without applying significant shear force and kneaders which aim at realizing homogeneous mixing of components through decrease in the size of the components by applying shear force. Examples of the mixer include a bon blender, a tumble mixer, and a Henschel mixer, which mainly make use of rotation of stirrer blades. Examples of the kneader include apparatuses, such as open rolls or a Bambury mixer, making use of shearing action between two rolls or rotors, and extruders such as a single screw extruder or a twin screw extruder. However, all these conventional mixers and kneaders have a shear rate of $1 \times 10^2$ $(sec^{-1})$ or less which is not sufficient for achieving the object of the present invention, and are not suitable for the process (S1) of the present invention.

It is preferred that temperature of mixing the low molecular weight material and the medium material in the process (S1) of the present invention is kept at or above the melting point of the medium material (when the medium material has a crystalline structure) or at or above the glass transition temperature of the medium material (when the medium material has an aggregated structure). However, it is possible that the low molecular weight material and the medium material are mixed at a temperature below the melting point or below the glass transition temperature of the medium material when compatibility of the two materials is very good.

In the process (S2) described above, the medium material composite prepared above and the polymer material are mixed under the conditions that the rotation speed of the mixing machine is 20 to 100 r.p.m., preferably 30 to 80 r.p.m., and the temperature is 30 to 100°C, preferably 40 to 90°C. A rotation speed or a temperature outside of the specified ranges is not preferable because it is difficult for the effects of the present invention to be obtained outside of the specified ranges.

For the mixing in the process (S2) of the present invention, any type of mixing machine satisfying the conditions described above can be used.

Because the phase structure is controlled by the processes (S1) and (S2) described above, a polymer composition having a low modulus, showing homogeneous dispersion of a large amount of the low molecular weight material and exhibiting excellent suppression of bleeding of the low molecular weight material can easily be obtained. The general mechanism of the homogeneous dispersion of the medium material composite obtained in the process (S1) into the polymer material is not completely understood. Most of the composite is thought to be held in the polymer material in the form of minute particles which are formed by the process (S2) of the present invention. The object polymer composition cannot be obtained either when the medium material, the polymer material and a large amount of the low molecular weight material are mixed together without going through the processes (S1) and (S2) or when the polymer material and a large amount of the low molecular weight material are directly mixed together without going through the processes (S1) and (S2).

The polymer composition of the present invention has an Asker C hardness at 25°C of 25 to 75, preferably 30 to 70. When the Asker C hardness is lower than 25, compression set is increased. When the Asker C hardness is larger than 75, the object composition having a low modulus cannot be obtained. Thus, an Asker C hardness out of the specified ranges is not preferable.

The polymer composition of the present invention has a loss tangent (tan $\delta$) at 25°C, 5 Hz of 0.05 to 1, preferably 0.07 to 1. When the loss tangent is less than 0.05, the object composition having the high loss property cannot be obtained. When the loss tangent is more than 1, temperature dependence of various properties, such as modulus, is increased. Thus, a loss tangent out of the specified ranges is not preferable.

To the polymer composition of the present invention, fillers may optionally be mixed in addition to the low molecular weight material, the medium material and the polymer material which are described above. Examples of the filler include: particulate or powdery solid fillers, such as clay, diatomaceous earth, carbon black, silica, talc, barium sulfate, calcium carbonate, magnesium carbonate, metal oxides, mica, graphite, aluminum hydroxide, other flake form inorganic fillers, various types of metal powders, wood pieces, glass powder, ceramic powder, and particulate or powdery polymers; various types of natural and artificial short fibers and long fibers (such as straw, hair, glass fiber, metal fiber, and various types of polymer fibers).

The polymer composition of the present invention can be advantageously used in all fields of industry, particularly in the fields of electric appliances, sporting goods, industrial machines and instruments, precision machines and instruments, transportation machines and instruments, buildings, civil engineering, medical uses, leisure goods, and the like.

Applications of the polymer composition of the present invention is described in detail hereinafter.

The polymer composition of the present invention can hold a large amount of low molecular weight materials therein, such as liquid materials. Therefore, modulus of the polymer composition can be adjusted to a very low value. The polymer composition can be applied to a wide range of fields. When the polymer composition is used as an anti-vibration material, a material for controlling vibration, or a dumping material, examples of such application include fixed parts, such as sealing materials, packings, gaskets, grommets, and the like; supporting parts, such as mounts, holders, insulators, and the like; and damping members, such as stoppers, cushions, bumpers, and the like. The polymer composition of the present invention is advantageously used in apparatuses or electric appliances generating vibration and sound, such as air conditioners, washing machines, refrigerators, fans, cleaners, dryers, printers, blowers, and the like. When the polymer composition of the present invention is used as a dumping material, examples of advantageous applications include sporting goods, such as gloves, mitts, golf clubs, tennis rackets, and the like; insoles of shoes; various types of toys; audio instruments; electric and electronic instruments; beds; chairs; beds or chairs on which a person remains for a long time in the same position, such as chairs for theaters or chairs and beds for medial facilities, barber shops, and beauty salons; and seat materials for vehicles which are subject to vibration.

Furthermore, the polymer composition of the present invention can be applied also to medical materials and instruments, such as artificial legs, artificial hands, robots, electrodes for obtaining electrocardiogram, and electrodes for low frequency wave therapeutic instruments. When the polymer composition is used as a rubber having a very low modulus, examples of such applications include office automation instruments, hybrid rubber bearing, anti-vibration rubber, and racing tires. When the polymer composition is used as a plastic having a very low modulus, examples of the advantageous applications include various types of molded articles. Because the low molecular weight material held in the composition can be released with a controlled rate, the polymer composition can be used as a material which slowly releases substances such as perfumes, medical agents, functional agents, and the like.

Low molecular materials, such as various types of liquids, can be contained in a solid state medium by using the composition of the present invention. Therefore, the polymer composition can be advantageously applied to functional materials, such as electrode films, liquid crystal films, adhesive films, coating films and the like.

EXAMPLES

The invention will be understood more readily with reference to the following examples; however, these examples are intended to illustrate the invention and are not to be construed to limit the scope of the invention.

Various measurements were conducted according to the following methods.

Number-average molecular weight was measured by gel permeation chromatography (GPC; using an apparatus produced by Toso Co., Ltd.; GMH-XL; two columns connected in a series) using differential refractive index (RI) for the detection. Monodisperse polystyrene was used as the reference material and number-average molecular weight calibrated with the polystyrene was obtained.

Loss tangent (tan $\delta$) was measured by using an apparatus for measurement of viscoelasticity (a product of Rheometrix Co.) at a temperature of 25°C, a strain of 10 %, and a frequency of 5 Hz.

Bleeding rate (%) is an index for the bleeding property. To measure the bleeding rate, a sample of 3 cm × 3 cm × 3 cm was heated in an oven at 65°C for 40 hours and then a piece of paper was attached to each of the top face and the bottom face of the cubic sample. The pieces of paper to which liquid (low molecular weight material) is applied is removed from the sample. Bleeding rate was calculated from the difference between the weight of the original paper and the weight of the paper after it was removed from the sample.

The viscosity of a liquid and the solubility parameter were measured according to conventional methods.

Example 1

In the process (S1), the low molecular weight material and the medium material described hereinafter were mixed together by using a high shear type mixer shown in Figure 1. The mixing process is described with reference to Figure 1.

The specified amounts of the liquid (the low molecular weight material) and the medium material were charged into the mixer. A rotor (a turbine) 14 connected to a rotor shaft (a turbine shaft) 12 which was supported by a bearing 10 was rotated at a high speed. By making use of the sucking action formed by the rotation, the materials for mixing were sucked in from the lower part of a fixed wall (a stator) 16. The materials for mixing were subject to strong action of shear, impact and turbulence at the clearance between the rotor 14 rotating at a high speed and the fixed wall 16. The materials for mixing were then discharged to the upper direction through outlet holes 18. The direction of the upward flow was reversed by a flow-direction reversing plate 20 at the upper part so that the flow was directed downward along the side of the mixer until it reached the bottom part of the mixer.

Condition of the mixing in the process (S1) of the present example was as follows:

shear rate V: $1.0 \times 10^4$ (sec$^{-1}$)
circumferential rotation speed of the rotor v: 5.0 (m/sec)
clearance between the fixed wall and the rotor t: $5 \times 10^{-4}$ (m)
mixing temperature: 160°C
mixing time: 1 hour

The medium material composite holding the liquid therein and obtained by the process (S1) contained the medium material having a backbone structure of a three-dimensionally continuous network. Further, the composite was homogeneous with little bleeding even though a large amount of the liquid was contained therein.

In the next process (S2), the medium material composite thus prepared was mixed with the polymer material described hereinafter by using a Labo Plastomill at a rotation speed of 70 r.p.m. at 40°C for 10 minutes. The polymer composition thus obtained was cured at 145°C for 15 minutes. The cured product obtained had an Asker C hardness of 21 at 25°C. Both the polymer composition and the cured product showed little bleeding and were homogeneous. This was clearly shown by the result that the cured product had a bleeding rate of 0.1 %. The cured product had a tan $\delta$ value as large as 0.18. The cured product of the polymer composition thus obtained had properties of a general use material because it was prepared by using a general use low molecular weight material and a general use polymer material. Furthermore, the product was found to be a material which held a large amount of the low molecular weight material therein, had a very low modulus, and had a high loss property.

# Materials

| | |
|---|---|
| liquid (low molecular weight material) | dioctyl adipate |
| medium material | hydrogenated SBR[3] (number-average molecular weight $10 \times 10^4$) |
| polymer material | NR[1] |

| | |
|---|---|
| viscosity of the liquid (100°C) | 2 centipoise |
| difference in SP values[2] of the liquid and the medium material | 0.1 |
| difference in SP values[2] of the liquid and the polymer material | 0.3 |
| ratio by weight of the liquid to the medium material | 4 |
| ratio by weight of the liquid to the polymer material | 2 |

1) A mixture of NR was prepared according to the following formulation in advance and used.

| | | |
|---|---|---|
| NR | 100 | parts by weight |
| activated calcium carbonate | 36 | parts by weight |
| carbon black | 3 | parts by weight |
| sulfur | 2 | parts by weight |
| others (accelerator etc.) | 15 | parts by weight |

2) A solubility parameter value

3) A two-block copolymer comprising polyethylene and an ethylene/styrene random copolymer which was obtained by hydrogenating a two-block copolymer comprising polybutadiene and a butadiene/styrene random copolymer.

Example 2

The liquid (the low molecular weight material) and the medium material described hereinafter were mixed together according to the same process as the process (S1) in Example 1 to obtain a medium material composite holding the liquid therein. The medium material composite holding the liquid therein and obtained by the process (S1) was the same as the medium material composite of Example 1.

In the next process (S2), the medium material composite thus prepared was mixed with the polymer material described hereinafter by using a Labo Plastomill at a rotation speed of 50 r.p.m. at 50°C for 10 minutes. The polymer composition thus obtained was cured at 160°C for 50 minutes. The cured product obtained had an Asker C hardness of 25 at 25°C. Both the polymer composition and the cured product showed little bleeding and were homogeneous. This was clearly shown by the result that the cured product had a bleeding rate of 0.2 %. The cured product had a tan $\delta$ value as large as 0.16. The cured product of the polymer composition thus obtained had properties of a general use material. Furthermore, the product was found to be a material which held a large amount of the low molecular weight material therein, had a very low modulus, and had a high loss property.

## Materials

| liquid (low molecular weight material) | naphthenic oil[3] |
|---|---|
| medium material | hydrogenated SBR[4] (number-average molecular weight $10\times10^4$) |
| polymer material | EPDM[1] |

| viscosity of the liquid (100°C) | 6 centipoise |
|---|---|
| difference in SP values[2] of the liquid and the medium material | 0.5 |
| difference in SP values[2] of the liquid and the polymer material | 0.5 |
| ratio by weight of the liquid to the medium material | 4 |
| ratio by weight of the liquid to the polymer material | 4 |

1) A mixture of EPDM (a product of Japan Synthetic Rubber Co., Ltd., EP33) was prepared according to the following formulation in advance and used.

| EPDM | 100 | parts by weight |
|---|---|---|
| ZnO | 5 | parts by weight |

sulfur 1.5 parts by weight

others (accelerator etc.) 3 parts by weight

2) A solubility parameter value

3) A product of Japan Sun Oil Company, Sunthene 430

4) A two-block copolymer comprising polyethylene and an ethylene/styrene random copolymer which was obtained by hydrogenating a two-block copolymer comprising polybutadiene and a butadiene/styrene random copolymer.

Example 3

The liquid (the low molecular weight material) and the medium material described hereinafter were mixed together according to the same process as the process (S1) in Example 1 except that the mixing temperature was 170°C to obtain a medium material composite holding the liquid therein. The medium material composite holding the liquid therein and obtained by the process (S1) was the same as the medium material composite of Example 1.

In the next process (S2), the medium material composite thus prepared was mixed with the polymer material described hereinafter by using a Labo Plastomill at a rotation speed of 60 r.p.m. at 40°C for 10 minutes. The polymer composition thus obtained was cured at 155°C for 30 minutes. The cured product obtained had an Asker C hardness of 24 at 25°C. Both the polymer composition and the cured product showed little bleeding and were homogeneous. This was clearly shown by the result that the cured product had a bleeding rate of 0.1 %. The cured product had a tan $\delta$ value as large as 0.19. The cured product of the polymer composition thus obtained had properties of a general use material. Furthermore, the product was found to be a material which held a large amount of the low molecular weight material therein, had a very low modulus, and had a high loss property.

## Materials

| | |
|---|---|
| liquid (low molecular weight material) | synthetic aromatic oil[1] |
| medium material | hydrogenated SBR[4] (number-average molecular weight $9 \times 10^4$) |
| polymer material | SBR[2] |
| viscosity of the liquid (100°C) | 6 centipoise |
| difference in SP values[3] of the liquid and the medium material | 0.4 |
| difference in SP values[3] of the liquid and the polymer material | 0.5 |
| ratio by weight of the liquid to the medium material | 4 |
| ratio by weight of the liquid to the polymer material | 2 |

1) A product of Japan Sun Oil Company, Z-300

2) A mixture of SBR (a product of Japan Synthetic Rubber Co., Ltd., 1507) was prepared according to the following formulation in advance and used.

| | | |
|---|---|---|
| SBR | 100 | parts by weight |
| activated calcium carbonate | 3 | parts by weight |

| carbon black | 3 | parts by weight |
| sulfur | 2 | parts by weight |
| others (accelerator etc.) | 2.5 | parts by weight |

3) A solubility parameter value

4) A two-block copolymer comprising polyethylene and an ethylene/styrene random copolymer which was obtained by hydrogenating a two-block copolymer comprising polybutadiene and a butadiene/styrene random copolymer.

Example 4

The liquid (the low molecular weight material) and the medium material described hereinafter were mixed together according to the same process as the process (S1) in Example 1 to obtain a medium material composite holding the liquid therein. The medium material composite holding the liquid therein and obtained by the process (S1) was the same as the medium material composite of Example 1.

In the next process (S2), the medium material composite thus prepared was mixed with a polymer material described hereinafter by using a Labo Plastomill at a rotation speed of 70 r.p.m. at 40°C for 10 minutes. The polymer composition thus obtained was cured at 145°C for 15 minutes. The cured product obtained had an Asker C hardness of 21 at 25°C. Both the polymer composition and the cured product showed little bleeding and were homogeneous. This was clearly shown by the result that the cured product had a bleeding rate of 0.1 %. The cured product had a tan $\delta$ value as large as 0.15.

The cured product of the polymer composition thus obtained had properties of a general use material. Furthermore, the product was found to be a material which held a large amount of the low molecular weight material therein, had a very low modulus, and had a high loss property.

## Materials

| | |
|---|---|
| liquid (low molecular weight material) | synthetic aromatic oil[3] |
| medium material | hydrogenated SBR[4] (number-average molecular weight $10 \times 10^4$) |
| polymer material | NR[1] |
| viscosity of the liquid (100°C) | 2 centipoise |
| difference in SP values[2] of the liquid and the medium material | 0.1 |
| difference in SP values[2] of the liquid and the polymer material | 0.3 |
| ratio by weight of the liquid to the medium material | 4 |
| ratio by weight of the liquid to the polymer material | 2 |

1) A mixture of NR was prepared according to the following formulation in advance and used.

| | | |
|---|---|---|
| NR | 100 | parts by weight |
| activated calcium carbonate | 36 | parts by weight |
| carbon black | 3 | parts by weight |
| sulfur | 2 | parts by weight |
| others (accelerator etc.) | 15 | parts by weight |

2) A solubility parameter value

3) A product of Japan Sun Oil Company, Z300

4) A product of Japan Synthetic Rubber Co., Ltd., E4400P, a block copolymer of polystyrene, polyethylene/butylene, and polyethylene.

Example 5

The liquid (the low molecular weight material) and the medium material described hereinafter were mixed together according to the same process as the process (S1) in Example 1 to obtain a medium material composite holding the liquid therein. The medium material composite holding the liquid therein and obtained by the process (S1) was the same as the medium material composite of Example 1.

In the next process (S2), the medium material composite thus prepared was mixed with the polymer material described hereinafter by using a Labo Plastomill at a rotation speed of 50 r.p.m. at 50°C for 10 minutes. The polymer composition thus obtained was cured at 160°C for 50 minutes. The cured product obtained had an Asker C hardness of 25 at 25°C. Both the polymer composition and the cured product showed little bleeding and were homogeneous. This was clearly shown by the result that the cured product had a bleeding rate of 0.1 %. The cured product had a tan $\delta$ value as large as 0.20.

The cured product of the polymer composition thus obtained had properties of a general use material. Furthermore, the product was found to be a material which held a large amount of the low molecular weight material therein, had a very low modulus, and had a high loss property.

## Materials

| | |
|---|---|
| liquid (low molecular weight material) | naphthenic oil[3] |
| medium material | hydrogenated SBR[4] (number-average molecular weight $10\times10^4$) |
| polymer material | EPDM[1] |

| | |
|---|---|
| viscosity of the liquid (100°C) | 6 centipoise |
| difference in SP values[2] of the liquid and the medium material | 0.5 |
| difference in SP values[2] of the liquid and the polymer material | 0.5 |
| ratio by weight of the liquid to the medium material | 4 |
| ratio by weight of the liquid to the polymer material | 4 |

1) A mixture of EPDM (a product of Japan Synthetic Rubber Co., Ltd., EP33) was prepared according to the following formulation in advance and used.

| | | |
|---|---|---|
| EPDM | 100 | parts by weight |
| ZnO | 5 | parts by weight |
| sulfur | 1.5 | parts by weight |
| others (accelerator etc.) | 3 | parts by weight |

2) A solubility parameter value

3) A product of Japan Sun Oil Company, Sunthene 430

4) A product of Japan Synthetic Rubber Co., Ltd., E4400P, a block copolymer of polystyrene, polyethylene/butylene, and polyethylene.

Example 6

The liquid (the low molecular weight material) and the medium material described hereinafter were mixed together according to the same process as the process (S1) in Example 1 to obtain a medium material composite holding the liquid therein. The medium material composite holding the liquid therein and obtained by the process (S1) was the same as the medium material composite of Example 1.

In the next process (S2), the medium material composite thus prepared was mixed with the polymer material described hereinafter by using a Labo Plastomill at a rotation speed of 70 r.p.m. at 40°C for 10 minutes. The polymer composition thus obtained was cured at 145°C for 15 minutes. The cured product obtained had an Asker C hardness of 21 at 25°C. Both the polymer composition and the cured product showed little bleeding and were homogeneous. This was clearly shown by the result that the cured product had a bleeding rate of 0.1 %. The cured product had a tan δ value as large as 0.16.

The cured product of the polymer composition thus obtained had properties of a general use material. Furthermore, the product was found to be a material which held a large amount of the low molecular weight material therein, had a very low modulus, and had a high loss property.

## Materials

| | |
|---|---|
| liquid (low molecular weight material) | paraffinic oil[3] |
| medium material | hydrogenated BR[4] (number-average molecular weight $10 \times 10^4$) |
| polymer material | NR[1] |
| viscosity of the liquid (100°C) | 2 centipoise |
| difference in SP values[2] of the liquid and the medium material | 0.1 |
| difference in SP values[2] of the liquid and the polymer material | 0.3 |
| ratio by weight of the liquid to the medium material | 4 |
| ratio by weight of the liquid to the polymer material | 2 |

1) A mixture of NR was prepared according to the following formulation in advance and used.

| | | |
|---|---|---|
| NR | 100 | parts by weight |
| activated calcium carbonate | 36 | parts by weight |
| carbon black | 3 | parts by weight |

sulfur                                    2    parts by weight

others (accelerator etc.)                 15   parts by weight

2) A solubility parameter value

3) A product of Japan Sun Oil Company, Sunpar 110

4) A product of Japan Synthetic Rubber Co., Ltd., E6100P, a block copolymer of polyethylene, polyethylene/butylene, and polyethylene.

Example 7

The liquid (the low molecular weight material) and the medium material described hereinafter were mixed together according to the same process as the process (S1) in Example 1 to obtain a medium material composite holding the liquid therein. The medium material composite holding the liquid therein and obtained by the process (S1) was the same as the medium material composite of Example 1.

In the next process (S2), the medium material composite thus prepared was mixed with the polymer material described hereinafter by using a Labo Plastomill at a rotation speed of 50 r.p.m. at 50°C for 10 minutes. The polymer composition thus obtained was cured at 160°C for 50 minutes. The cured product obtained had an Asker C hardness of 25 at 25°C. Both the polymer composition and the cured product showed little bleeding and were homogeneous. This was clearly shown by the result that a cured product had a bleeding rate of 0.1 %. The cured product had a tan $\delta$ value as large as 0.14.

The cured product of the polymer composition thus obtained had properties of a general use material. Furthermore, the product was found to be a material which held a large amount of the low molecular weight material therein, had a very low modulus, and had a high loss property.

## Materials

| | |
|---|---|
| liquid (low molecular weight material) | paraffinic oil[3] |
| medium material | hydrogenated BR[4] (number-average molecular weight $10\times10^4$) |
| polymer material | EPDM[1] |
| viscosity of the liquid (100°C) | 6 centipoise |
| difference in SP values[2] of the liquid and the medium material | 0.5 |
| difference in SP values[2] of the liquid and the polymer material | 0.5 |
| ratio by weight of the liquid to the medium material | 4 |
| ratio by weight of the liquid to the polymer material | 4 |

1) A mixture of EPDM (a product of Japan Synthetic Rubber Co., Ltd., EP33) was prepared according to the following formulation in advance and used.

| EPDM | 100 | parts by weight |
| ZnO | 5 | parts by weight |
| sulfur | 1.5 | parts by weight |
| others (accelerator etc.) | 3 | parts by weight |

2) A solubility parameter value

3) A product of Japan Sun Oil Company, Sunpar 110

4) A product of Japan Synthetic Rubber Co., Ltd., E6100P, a block copolymer of polyethylene, polyethylene/butylene, and polyethylene.

Comparative Example 1

Mixing of a liquid (a low molecular weight material) and a polymer material with a Labo Plastomill was attempted by using the materials described hereinafter. However, no homogeneous polymer composition holding the liquid therein was obtained.

## Materials

| liquid (low molecular weight material) | dioctyl adipate |
| --- | --- |
| polymer material | NR[1] |
| viscosity of the liquid (100°C) | 2 centipoise |
| difference in SP values[2] of the liquid and the polymer material | 0.3 |
| ratio by weight of the liquid to the polymer material | 2 |

1) A mixture of NR was prepared according to the following formulation in advance and used.

| NR | 100 | parts by weight |
| --- | --- | --- |
| activated calcium carbonate | 36 | parts by weight |
| carbon black | 3 | parts by weight |
| sulfur | 2 | parts by weight |
| others (accelerator etc.) | 15 | parts by weight |

2) A solubility parameter value

Comparative Example 2

Mixing of a liquid (a low molecular weight material) and a polymer material with a Labo Plastomill was attempted by using the materials described hereinafter. However, no homogeneous polymer composition holding the liquid therein was obtained.

## Materials

| liquid (low molecular weight material) | naphthenic oil[3] |
| --- | --- |
| polymer material | EPDM[1] |
| viscosity of the liquid (100°C) | 6 centipoise |
| difference in SP values[2] of the liquid and the polymer material | 0.5 |
| ratio by weight of the liquid to the polymer material | 4 |

1) A mixture of EPDM (a product of Japan Synthetic Rubber Co., Ltd., EP33) was prepared according to the following formulation in advance and used.

| EPDM | 100 | parts by weight |
| --- | --- | --- |
| ZnO | 5 | parts by weight |
| sulfur | 1.5 | parts by weight |
| others (accelerator etc.) | 3 | parts by weight |

2) A solubility parameter value

3) A product of Japan Sun Oil Company, Sunthene 430

Comparative Example 3

Mixing of materials was attempted according to the same process as the process (S1) in Example 1 except that the mixing was conducted by using a mixing machine under the following conditions:

| shear rate V: | $1.0 \times 10^2$ (sec$^{-1}$) |
| --- | --- |
| circumferential rotation speed of the rotor v: | 0.05 (m/sec) |
| clearance between the fixed wall and the rotor t: | $5 \times 10^{-4}$ (m) |
| mixing temperature: | 170°C |
| mixing time: | 1 hour |

As the result of the attempted mixing, no homogeneous mixture of the liquid and the medium was obtained.

## Claims

1. A polymer composition comprising a medium material composite (A) which holds a low molecular weight material therein and which comprises a low molecular weight material and a medium material, and a polymer material (B), wherein

the low molecular weight material has a viscosity of $5 \times 10^5$ centipoise or lower at 100°C,

difference in solubility parameters of the low molecular weight material and the medium material is 3 or less,

ratio by weight of the low molecular weight material to the medium material is 1 or more,

difference in solubility parameters of the low molecular weight material and the polymer material is 4 or less, and

ratio by weight of the low molecular weight material to the polymer material is 0.3 or more.

2. A polymer composition according to Claim 1, which has an Asker hardness C of 25 to 75 at 25°C and a loss tangent (tan $\delta$) of 0.05 to 1 at 25°C and 5 Hz.

3. A polymer composition according to Claims 1 or 2, wherein the medium material has a backbone structure of a three-dimensionally continuous network.

4. A polymer composition according to any one of Claims 1 to 3, wherein the medium material is a thermoplastic elastomer.

5. A polymer composition according to Claim 4, wherein the thermoplastic elastomer is a hydrogenation product of a butadiene polymer or a hydrogenation product of a butadiene-styrene copolymer.

6. A polymer composition according to any one of the preceding Claims wherein the polymer material is ethylene-propylene rubber, ethylene-propylene-diene terpolymer rubber, natural rubber, isoprene rubber, styrene-butadiene rubber, or butadiene rubber.

7. A process for producing a polymer composition comprising a process (S1) for preparing a medium material composite holding a low molecular weight material therein by mixing the low molecular weight material and a medium material, and a process (S2) of mixing the prepared medium material composite at least with a polymer material, wherein

the process (S1) comprises mixing the low molecular weight material having a viscosity of $5 \times 10^5$ centipoise or lower at 100°C and the medium material having a solubility parameter different from that of the low molecular weight material by 3 or less in such amounts that ratio by weight of the low molecular weight material to the medium material is 1 or more, by using a mixing machine under such a shearing condition that the shear rate V which is defined by $V = v/t$ (sec$^{-1}$) [v (m/sec): circumferential rotation speed of a rotor; t (m): clearance between the fixed wall and the rotor] is $5 \times 10^2$ or higher, and the mixing temperature is equal to or higher than the melting point or the glass transition temperature of the medium material, to obtain the medium material composite holding the low molecular weight material therein, in which the medium material has a backbone structure of a three-dimensionally continuous network; and

the process (S2) comprises mixing the medium material composite holding the low molecular weight material therein with the polymer material having a solubility parameter different from that of the low molecular weight material by 4 or less in such amounts that ratio by weight of the low molecular weight material to the polymer material is 0.3 or more, by using a mixing machine at a rotation speed of 20 to 100 r.p.m. at a mixing temperature of 30 to 100°C.

8. A process for producing a polymer composition according to Claim 7, wherein the polymer composition has an Asker hardness C of 25 to 75 at 25°C and a loss tangent (tan $\delta$) of 0.05 to 1 at 25°C and 5 Hz.

9. A process for producing a polymer composition according to Claims 7 or 8 wherein the medium material has a backbone structure of a three-dimensionally continuous network.

10. A process for producing a polymer composition according to any one of Claims 7 to 9 wherein the medium material is a thermoplastic elastomer.

11. A process for producing a polymer composition according to Claim 10, wherein the thermoplastic elastomer is a hydrogenation product of a butadiene polymer or a hydrogenation product of a butadiene-styrene copolymer.

12. A process for producing a polymer composition according to any one of Claims 7 to 11 wherein the polymer material is ethylene-propylene rubber, ethylene-propylene-diene terpolymer rubber, natural rubber, isoprene rubber, styrene-butadiene rubber, or butadiene rubber.

13. The use of the polymer composition as defined in any one of claims 1 to 6 in an anti-vibration material, a material for controlling vibration, a dumping material, medical materials and instruments, and low modulus rubber and plastics.

FIG. 1